# EUROPÄISCHE PATENTSCHRIFT

(11) **EP 0 935 936 B1**
(45) Veröffentlichungstag und Bekanntmachung des Hinweises auf die Patenterteilung: **02.07.2003**
(21) Anmeldenummer: 98119118.2
(22) Anmeldetag: 09.10.1998
(51) Int. Cl.: A47C 19/00, A47C 19/02

(54) **Bettrahmen**
Bed frame
Cadre de lit

(30) Priorität: 27.01.1998 DE 29801231 U
(43) Veröffentlichungstag der Anmeldung: 18.08.1999
(73) Patentinhaber: Recticel Internationale Bettsysteme GmbH, 59439 Holzwickede (DE)
(72) Erfinder: Lantzsch, Hans, 44328 Dortmund (DE)
(74) Vertreter: Patentanwälte Meinke, Dabringhaus und Partner

(56) Entgegenhaltungen:
- FR-A- 2 691 763
- GB-A- 2 162 920

## Beschreibung

Die Erfindung richtet sich auf einen Bettrahmen, insbesondere Federleistenbettrahmen mit verstellbarem Kopf- und Fußteil, wobei wenigstens die Seiten- und Querholme mittels steckbarer Verbindungselemente aneinandergefügt sind.

Derartige Bettrahmen gibt es in mannigfaltigen Gestaltungen, die Rahmen werden aus Metall, Kunststoff oder Holz gefertigt, wobei Quer- und Seitenholme ebenso wie die Rahmen von Kopf- und Fußteilen in der Regel aus einzelnen Elementen über Schraubverbindungen aneinandergefügt werden, wie z.B. in der GB-A-1 488 083 beschrieben. Die Befestigung mittels stirnseitiger Pilzkopfnägel oder Pilzkopfschrauben andererseits und Einhängebeschläge an dem korrespondieren Holm mit Aufnahmeschlitzen für die Pilzköpfe zeigt die DE-C-921 406.

Das Zusammenfügen von Möbelelementen lediglich mit Holzdübeln, die in entsprechende Ausnehmungen an einem korrespondierenden Möbelelement eingreifen, zeigt das DE-U-93 12 665. Eine Konstruktion, die ebenfalls Schrauben vermeiden will und Standfüße eines Möbelstückes zeigt mit einer eingebrachten Gradleiste, die in entsprechende Nuten der Stirnseite eines zu verbindenden Seitenholmes eingreifen soll, zeigt das DE-U-297 01 033.

Das gattungsbildende DE-U- 19 85 711 zeigt einen Verbindungsbeschlag für Möbelteile, bei dem eine mit einer Schwalbenschwanzführung versehene Kunststoffleiste mit mehreren angeformten Zapfen einer mittels mehrerer Holzschrauben aufzuschraubender Profilleiste gegenübersteht. Diese beiden Elemente, d.h. sowohl die Profilschiene wie die Profilleiste, können aus Kunststoff gefertigt sein.

Aufgabe der Erfindung ist die Schaffung einer Lösung, mit der eine besonders große Vielfalt an Montagesituationen mit entsprechenden Beschlägen erfaßbar ist, wobei der Montageaufwand möglichst gering sein soll.

Bei einem Bettrahmen der eingangs bezeichneten Art wird diese Aufgabe gemäß der Erfindung dadurch gelöst, daß die Verbindungselemente als an den Enden der Seiten- und Querholme angebrachte Kunststoffelemente, die mittelbar oder unmittelbar zusammenfügbar sind, ausgebildet sind, wobei die Kunststoffelemente mit Einsteckzapfen zum Eingriff in entsprechende Bohrungen in den Stirnseiten der Holme oder Rahmenleisten ausgerüstet sind.

Mit den erfindungsgemäßen Verbindungselementen lassen sich eine Reihe von Vorteilen erreichen. Als Kunststoffelemente können sie einer Vielzahl von Anwendungsmöglichkeiten angepaßt sein, wobei die Einsteckzapfen beispielsweise unabhängig von der Ausbildung des Kunststoffelementes den gleichen Abstand und die gleichen Durchmesser aufweisen können, um ein rationelles Fertigen zu ermöglichen.

Werden besonders hohe Lasten erwartet, kann zusätzlich vorgesehen sein, daß die Einsteckzapfen der Kunststoffelemente als von Schrauben durchsetzte Befestigungsdübel ausgebildet sind. Hier wird die Zapfentechnologie mit der Dübeltechnologie in einfacher Weise kombiniert.

In weiterer Ausgestaltung ist nach der Erfindung vorgesehen, Rahmenecken bildende Kunststoffkappen vorzusehen, die mit Eingriffsschlitzen für die Kunststoffelemente an den Holmstirnseiten versehen sind. Hier können die Rahmenecken bildenden Kunststoffkappen sowohl gestalterische Merkmale eines entsprechend ausgestatteten Bettrahmens aufweisen, wie auch die Funktion der Eckverbindungen übernehmen.

Zur Erleichterung des Zusammenfügens der Elemente kann vorgesehen sein, daß die die Kunststoffelemente an den Holmstirnseiten mit einen T- oder Schwalbenschwanzsteg aufweisenden, stirnseitigen Platten versehen sind, die in der Verbindungslage in T- oder Schwalbenschwanznuten der Eckkappen und/oder der Gegenkunststoffelemente eingreifen.

Bei Nut-/Federverbindungen kann es je nach Einbaulage und Beanspruchung zu einem ungewollten Lösen der Verbindung kommen. Um hier Abhilfe zu schaffen, sieht die Erfindung vor, daß der in eine T- oder Schwalbenschwanznut eingreifende T- oder Schwalbenschwanzsteg mit einer nach außen weisenden Rastlasche und der korrespondierende Nutengrund mit einer Rastausnehmung versehen ist. Mit dieser Rastlasche einerseits und Rastausnehmung andererseits läßt sich mit äußerst einfachen Mitteln eine feste Verbindung schaffen, die für die notwendige Sicherheit sorgt.

Vorteilhaft kann es sein, wenn die aufschwenkbaren Seitenholme der Bettrahmen mit eine Schwalbenschwanznut aufweisenden Platten versehen sind und die Querholme mit einen Schwalbenschwanzsteg aufweisenden Platten. Auch hier kann die Gestaltung wiederum umgekehrt ausgebildet sein, d.h. die Beschläge von Seitenholmen und Querholmen sind umgekehrt gestaltet.

Um die Fixierung und/oder das optische Erscheinungsbild zu verbessern, kann nach der Erfindung vorgesehen sein, daß die den Schwalbenschwanzsteg und/oder die Schwalbenschwanznut aufweisenden Platten die Mittelfläche einer stirnseitigen Kappe bilden mit den Einsteckzapfen im Kappeninneren.

Vorteilhaft kann es sein, wenn, wie dies die Erfindung ebenfalls vorsieht, im Schwenkbereich von Kopf- und/oder Fußteil die Innenflächen der Rahmenlängsholme mit einer Achsplatte aus Kunststoff versehen ist, wobei die Schwenkenden der Rostlängsholme mit Schwenkzapfen ausgerüstet sind, die in Ausnehmungen der Achsplatten eingreifen.

An dieser Stelle sei bemerkt, daß die Befestigungen der Schwenkachsen in Rahmenseitenteilen für sich gesehen bekannt sind, häufig handelt es sich hier aber um Metallbeschläge. Der Vorteil der Achsplatten aus Kunststoff besteht darin, daß sie in ihrer Ausgestaltung den sonstigen Kunststoffelementen des Bettrahmens angeglichen sein können, so daß etwa nur mit einem identischen Werkzeug sämtliche Bohrungen für die Zapfen der Beschlagelemente ausgeführt werden können.

Die Schwenkzapfen weisen zweckmäßig pilzartige Köpfe auf, die in entsprechende Schwenkausnehmungen an der jeweiligen Achsplatte eingreifen. Diese Achsplatten sind mit Eingriffsschlitzen versehen für den jeweiligen Schwenkkopf, wobei in diesen Eingriffsschlitz Rastvorsprünge vorgesehen sind, die in der Gebrauchslage den Schwenkbereich des Schwenkzapfens in der Schwenkausnehmung gegen versehentliches Ausheben fixieren.

Die Erfindung ist nachstehend anhand der Zeichnung beispielsweise näher erläutert. Diese zeigt in
- Fig. 1: eine dreidimensionale Darstellung von Beschlägen zur Bildung einer erfindungsgemäßen Ecke eines Bettrahmens,
- Fig. 2: eine Aufsicht auf die Ecke des Bettrahmens im montierten Zustand,
- Fig. 3: die Beschläge zur Bildung einer Eckverbindung ohne Zusatzelement,
- Fig. 4: die Aussicht auf eine Ecke mit den Elementen gemäß Fig. 3,
- Fig. 5 und 6: Seitenansichten der Stirnbereiche von Quer - und Seitenholmen mit Beschlägen gemäß Fig. 3 entsprechend der Pfeile V und VI in den Fig. 7 und 8,
- Fig. 7 und 8: Seitenansichten auf Holme mit Endbeschlägen,
- Fig. 9: Aufsicht auf eine Schwenkplatte an einem Seitenholm,
- Fig. 10: einen Schnitt durch einen Schwenkkopf gemäß Linie X in Fig. 11 sowie in
- Fig. 11: einen Schnitt im Bereich des Schwenkzapfens an einem Seitenholm.

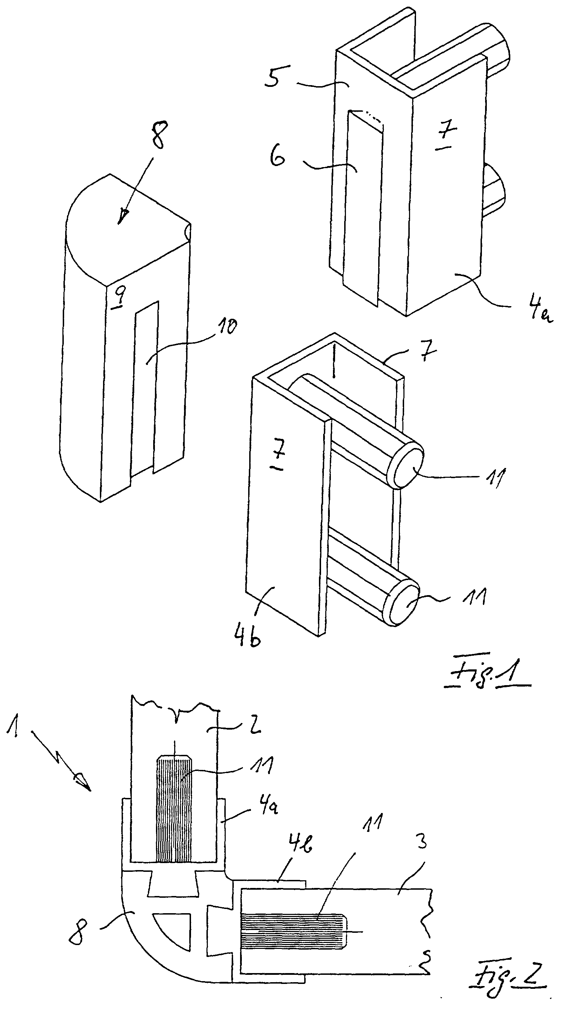

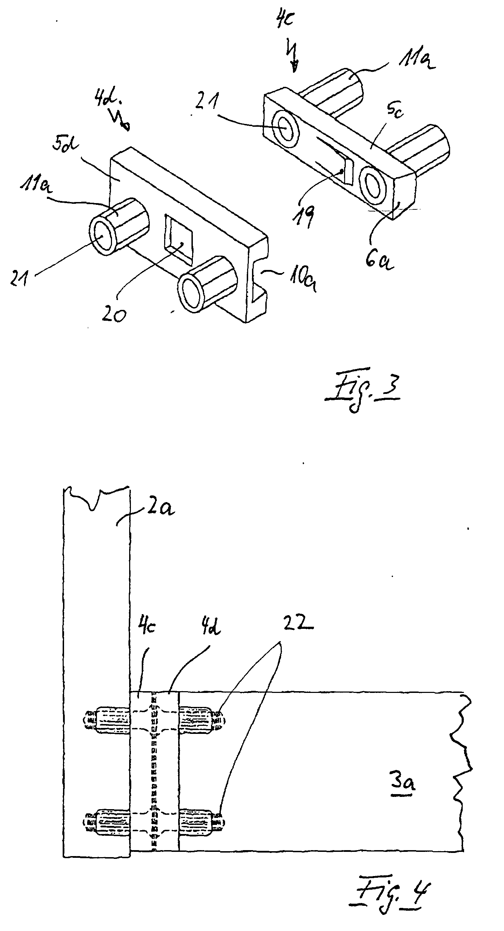

Ein nicht näher dargestellter, in Fig. 2 mit 1 bezeichneter Bettrahmen besteht im wesentlichen aus einem Paar von Längs- bzw. Seitenholmen 2 und einem Paar von Querholmen 3 z.B. aus verleimtem Schichtholz.

Die in Fig. 2 wiedergegebenen freien Enden sind bei den Ausführungsbeispielen gemäß Fig. 1 und 2 mit Kunststoffkappen 4a und 4b ausgestattet, die an ihrer Mittelfläche 5 mit einem Schwalbenschwanzsteg 6 ausgerüstet sind und mit ihren Kappenseitenwänden 7 die freien Enden der Holme 2 und 3 umgreifen.

Gleichzeitig ist zur Bildung der Rahmenecke je eine Eckkappe 8 vorgesehen mit zwei 90° zueinander ausgerichteten Anlageflächen 9 mit je einer Schwalbenschwanznut 10, in denen die Schwalbenschwanzstege 6 der Kunststoffkappen 4a und 4b eingreifen, wie sich dies aus Fig. 2 ergibt.

Erkennbar weisen die stirnseitigen Platten 5 der Kappen 7 auf ihrer Innenseite, d.h. der den Schwalbenschwanzstegen 6 gegenüberliegenden Fläche, im dargestellten Beispiel je zwei Befestigungszapfen 11 auf, die einstückig angeformt sind und die in entsprechende Bohrungen in den Stirnseiten der Holme 2 und 3 einschlagbar sind.

Mit dieser Gestaltung läßt sich eine völlig schraubenfreie Verbindung zwischen Längsholm 2 und Querholm 3 erreichen, in die nach Einbringung der entsprechenden Bohrungen für die Zapfen 11 die Kappen 7 auf die Stirnseiten aufgeschlagen werden und unter Zuhilfenahme der Eckkappen 8 aneinander fixiert werden.

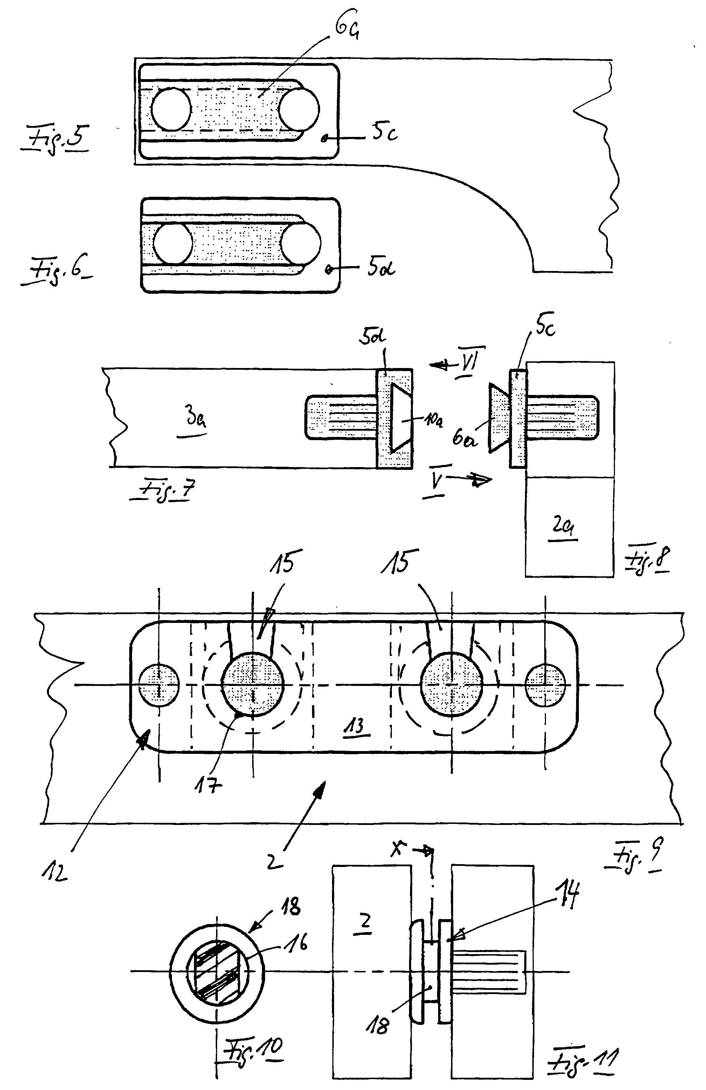

In den Fig. 3 und 4 ist ein abgewandeltes Ausführungsbeispiel dargestellt. Hier sind die Verbindungselemente 4c und 4d wiederum als stirnseitige Platten 5c und 5d ausgebildet mit Einschlagzapfen 11a, wobei hier die stirnseitige Platte 5c den Schwalbenschwanzsteg 6a und die stirnseitige Platte 5d die Schwalbenschwanznut 10a aufweist. Für die Zapfen 11a werden die Verbindungselemente 4c bzw. 4d in die Stirnseiten des Längsholmes 2a und Querholmes 3a eingeschlagen, durch einfaches Ineinanderfügen werden die Elemente miteinander verbunden. Dies ist in den Fig. 5 bis 8 wiederum in Seitenansicht und Aufsicht gemäß Pfeil IV bzw. Pfeil V dargestellt.

Wie sich aus Fig. 3 ergibt, können die stirnseitigen Platten 5, an denen sich die Einsteckzapfen 11 befinden, auch als integraler Bestandteil des Schwalbenschwanzsteges 6, 6a ausgebildet sein. Um ein Verrasten der Kunststoffelemente 4c und 4d aneinander zu bewirken, kann beispielsweise das Verbindungselement 4c mit einer zentrischen, nach außen weisenden Rastlasche 19 und der Nutengrund der Schwalbenschwanznut 10a mit einer Rastausnehmung 20 ausgerüstet sein.

In den Fig. 3 und 4 ist noch die Möglichkeit dargestellt, die Einsteckzapfen 11 mit Durchgangsbohrungen 21 auszurüsten, durch die in der Montagelage Spreizschrauben 22 hindurchgeführt werden können, wie dies in Fig. 4 angedeutet ist, um eine festere Verbindung insbesondere dann zu ermöglichen, wenn höhere Belastungen zu erwarten sind.

In den Fig. 9 bis 11 ist der Beschlag 12 für einen Schwenkzapfen 13 wiedergegeben, wobei der Beschlag 12 von einer Achsplatte 13 gebildet wird, die am Seitenholm 2 eines Bettrahmens innen befestigbar ist. Die Schwenkplatte 13 weist für den Schwenkzapfen 18, der mit einem pilzähnlichen Kopf 14 ausgerüstet ist, sowohl für das Kopfteil wie für das Fußteil je einen Einführungsschlitz 15 auf, der vom mittleren Schwenkteil 16 des Pilzkopfes durchdrungen wird, derart, daß dieser Bereich sich klemmend im Schwenklagerbereich 17 einlegt, wie sich dies aus Fig. 9 ergibt.

Wird der Pilzkopf 14 in der Weise, wie er geschnitten in Fig. 10 dargestellt ist, gestaltet, kann die Verjüngung des Einführschlitzes 15 vergleichsweise stark ausgeführt sein, derart, daß der mit Abflachung versehene mittlere Wellenbereich nur in einer spezifischen, vorzugsweise senkrecht nach oben gerichteten Ausrichtung des Fuß- bzw. Kopfteiles aus dem Schlitz 15 ausgezogen werden kann. Diese Gestaltung ist aber nicht zwingend notwendig, hier können auch vergleichsweise geringe Untermaße der Schlitzweite im Bereich der Drehachse ausreichen, um für eine notwendige Hemmnis gegenüber dem Ausziehen zu sorgen.

Erkennbar läßt sich ein so ausgestalteter Bettrahmen 1 lediglich durch Anbringung von Bohrlöchern und Einschlagen der Paarelemente bzw. der Achsplatten einfach, insbesondere vollautomatisch herstellen. Ein weiterer Vorteil besteht darin, daß ein solcher Rahmen ggf. demontiert einem Kunden zur Verfügung gestellt werden kann, der Laie ist und der mit Hilfe der Endbeschläge der Quer- und Seitenholme der rückseitig vormontierten Endbeschläge und Achsplatte den Rahmen ohne Werkzeuge selbst zusammensetzen kann.

## Patentansprüche

1. Bettrahmen (1), insbesondere Federleistenbettrahmen mit verstellbarem Kopf- und Fußteil, wobei wenigstens die Seiten- und Querholme (2,3) mittels steckbarer Verbindungselemente (4) aneinandergefügt sind,
**dadurch gekennzeichnet,**
**daß** die Verbindungselemente als an den Enden der Seitenund Querholme (2 bzw. 3) angebrachte Kunststoffelemente (4), die mittelbar oder unmittelbar zusammenfügbar sind, ausgebildet sind, wobei die Kunststoffelemente mit Einsteckzapfen (11) zum Eingriff in entsprechende Bohrungen in den Stirnseiten der Holme (2,3) oder Rahmenleisten (2a,3a) ausgerüstet sind.

2. Bettrahmen nach Anspruch 1,
**dadurch gekennzeichnet,**
**daß** die Einsteckzapfen (11) der Kunststoffelemente (4) als von Schrauben durchsetzbare Befestigungsdübel ausgebildet sind.

3. Bettrahmen nach Anspruch 1 oder 2,
**gekennzeichnet durch**
Rahmenecken bildende Kunststoffkappen (8), die mit Eingriffsschlitzen (10) für die Kunststoffelemente (4) an den Holmstirnseiten versehen sind.

4. Bettrahmen nach Anspruch 3,
**dadurch gekennzeichnet,**
**daß** die die Kunststoffelemente (4) an den Holmstirnseiten mit einen T- oder Schwalbenschwanzsteg (6) aufweisenden, stirnseitigen Platten (5) versehen sind, die in der Verbindungslage in T- oder Schwalbenschwanznuten (10) der Eckkappen (8) und/oder der Gegenkunststoffelemente (4) eingreifen.

5. Bettrahmen nach einem der vorangehenden Ansprüche,
**dadurch gekennzeichnet,**
**daß** der in eine T- oder Schwalbenschwanznut (10,10a) eingreifende T- oder Schwalbenschwanzsteg (6 oder 6a) mit einer nach außen weisenden Rastlasche (19) und der korrespondierende Nutengrund mit einer Rastausnehmung (20) versehen ist.

6. Bettrahmen nach einem der vorangehenden Ansprüche,
**dadurch gekennzeichnet,**
**daß** die aufschwenkbaren Seitenholme (3a) der Bettrahmen mit eine Schwalbenschwanznut (10a) aufweisenden Platten (5d) versehen sind und die Querholme (2a) mit einen Schwalbenschwanzsteg (6a) aufweisenden Platten (5c).

7. Bettrahmen nach einem der vorangehenden Ansprüche,
**dadurch gekennzeichnet,**
**daß** die den Schwalbenschwanzsteg (6) und/oder die Schwalbenschwanznut (10) aufweisenden Platten (5) die Mittelfläche einer stirnseitigen Kappe bilden mit dem Einsteckzapfen (11) im Kappeninneren.

8. Bettrahmen nach einem der vorangehenden Ansprüche,
**dadurch gekennzeichnet,**
**daß** im Schwenkbereich von Kopf- und/oder Fußteil die Innenfläche der Rahmenlängsholme (2) mit einer Achsplatte (12) aus Kunststoff versehen ist, wobei die Schwenkenden der Rostlängsholme mit Schwenkzapfen (18) ausgerüstet sind, die in Ausnehmungen (15) der Achsplatte (12) eingreifen.

9. Bettrahmen nach Anspruch 8,
**dadurch gekennzeichnet,**
**daß** die Schwenkzapfen (18) mit einem pilzartigen Kopf (14) und einem Bereich geringeren Durchmessers gegenüber dem Kopf (14) ausgerüstet sind, wobei der Kopf (14) hinter Schwenkbereiche in der Achsplatte (13) greift.

10. Bettrahmen nach einem der vorangehenden Ansprüche,
**dadurch gekennzeichnet,**
**daß** der Eingriffsschlitz (15) für jeden Kopf (14) in der Achsplatte (13) mit Rastvorsprüngen versehen ist, die in der Gebrauchslage den Schwenkbereich des Schwenkzapfens in der Schwenkausnehmung (15) fixieren.

## Claims

1. Bed frame (1), in particular a sprung slat bed frame with adjustable head part and foot part, wherein at least the side and transverse frame elements (2, 3) are joined to one another by means of plug-type joining elements (4), **characterised in that**
the joining elements are designed as synthetic elements (4) which are fitted to the ends of the side and transverse frame elements (2, 3), and which can be joined together directly or indirectly, wherein the synthetic elements are equipped with push-in pegs (11) for engaging into corresponding drilled holes in the frontal faces of the frame elements (2, 3) or frame slats (2a, 3a).

2. Bed frame in accordance with claim 1, **characterised in that** the push-in pegs (11) of the synthetic elements (4) are designed as fixing dowels which can be interspersed by screws.

3. Bed frame in accordance with claim 1 or 2, **characterised by** synthetic caps (8) which form frame corners, and which are equipped with engagement slits (10) for the synthetic elements (4) at the frontal faces of the frame elements.

4. Bed frame in accordance with claim 3, **characterised in that** the synthetic elements (4) at the frontal faces of the frame elements are equipped with frontal plates (5) which have a T-shaped or dovetail tongue (6), and which in the joined position engage into T-shaped or dovetail grooves (10) of the corner caps (8) and/or of the synthetic counterpart elements (4).

5. Bed frame in accordance with one of the preceding claims, **characterised in that** the T-shaped or dovetail tongue (6 or 6a) which engages into a T-shaped or dovetail groove (10, 10a) is equipped with a catch tab (19) which points outwards, and the corresponding groove base [is equipped] with a catch recess (20).

6. Bed frame in accordance with one of the preceding claims, **characterised in that** the side frame elements (3a) of the bed frame which can be swung upwards are equipped with plates (5d) which have a dovetail groove (10a), and the transverse frame elements (2a) [are equipped] with plates which have a dovetail tongue (6a).

7. Bed frame in accordance with one of the preceding claims, **characterised in that** the plates (5) which have the dovetail tongue (6) and/or the dovetail groove (10) form the middle surface of a frontal cap, with the push-in peg (11) in the interior of the cap.

8. Bed frame in accordance with one of the preceding claims, **characterised in that** in the pivot area of the head part and/or foot part, the inner surface of the longitudinal frame elements (2) is equipped with a synthetic axis plate (12), wherein the pivot ends of the longitudinal frame elements of the slat frame are equipped with pivot journals (18) which engage into recesses (15) of the axis plate (12).

9. Bed frame in accordance with claim 8, **characterised in that** the pivot journals (18) are equipped with a mushroom-like head (14) and an area of a smaller diameter in relation to the head (14), wherein the head (14) engages behind pivot areas in the axis plate (13).

10. Bed frame in accordance with one of the preceding claims, **characterised in that** in the axis plate (13), the engagement slit (15) for each head (14) is equipped with catch projections which, in the position for use, fix the pivot area of the pivot journal in the pivot recess (15).

## Revendications

1. Cadre de lit (1), en particulier cadre de lit à lattes élastiques, comportant une partie de tête et une partie de pied réglables, dans lequel au moins les longerons latéraux et transversaux (2, 3) sont assemblés les uns aux autres au moyen d'éléments d'assemblage (4) enfichables, **caractérisé en ce que** les éléments d'assemblage sont réalisés sous forme d'éléments en matière plastique (4), montés aux extrémités des longerons latéraux (2) et des longerons transversaux (3), éléments qui peuvent être assemblés directement ou indirectement, et qui sont équipés de tenons d'enfichage (11) destinés à s'engager dans des perçages correspondants dans les faces frontales des longerons (2, 3) ou des lattes de cadre (2a, 3a).

2. Cadre de lit selon la revendication 1, **caractérisé en ce que** les tenons d'enfichage (11) des éléments en matière plastique (4) sont réalisés sous forme de chevilles de fixation qui peuvent être traversées par des vis.

3. Cadre de lit selon l'une ou l'autre des revendications 1 et 2, **caractérisé par** des caches en matière plastique (8) formant des coins de cadre, qui sont pourvus de fentes d'engagement (10) pour les éléments en matière plastique (4) sur les faces frontales des longerons.

4. Cadre de lit selon la revendication 3, **caractérisé en ce que** sur les faces frontales des longerons, les éléments en matière plastique (4) sont pourvus de plaques (5) frontales présentant une âme en T ou en queue d'aronde (6) qui, en position d'assemblage, s'engagent dans des rainures en T ou en queue d'aronde (10) des caches de coins (8) et/ou des éléments en matière plastique antagonistes (4).

5. Cadre de lit selon l'une des revendications précédentes, **caractérisé en ce que** l'âme en T ou en queue d'aronde (6 ou 6a) s'engageant dans une rainure en T ou en queue d'aronde (10, 10a) est pourvue d'une patte d'enclenchement (19) orientée vers l'extérieur, et le fond de rainure correspondant est pourvu d'un évidement d'enclenchement (20).

6. Cadre de lit selon l'une des revendications précédentes, **caractérisé en ce que** les longerons latéraux (3a) pivotants du cadre de lit sont pourvus de plaques (5d) présentant une rainure en queue d'aronde (10a), et les longerons transversaux (2a) sont pourvus de plaques (5c) présentant une âme en queue d'aronde (6a).

7. Cadre de lit selon l'une des revendications précédentes, **caractérisé en ce que** les plaques (5) présentant l'âme en queue d'aronde (6) et/ou la rainure en queue d'aronde (10) forment la surface médiane d'un cache frontal avec le tenon d'erifichage (11) à l'intérieur du cache.

8. Cadre de lit selon l'une des revendications précédentes, **caractérisé en ce que** dans la région de pivotement de la partie de tête et/ou de la partie de pied, la surface intérieure des longerons longitudinaux (2) du cadre est pourvue d'une plaque d'axe (12) en matière plastique, les extrémités pivotantes des longerons longitudinaux du cadre étant équipées de pivots (18) qui s'engagent dans des évidements (15) de la plaque d'axe (13).

9. Cadre de lit selon la revendication 8, **caractérisé en ce que** les pivots (18) sont équipés d'une tête (14) en forme de champignon et d'une région de diamètre plus faible par rapport à la tête (14), la tête (14) s'engageant derrière des régions de pivotement dans la plaque d'axe (13).

10. Cadre de lit selon l'une des revendications précédentes, **caractérisé en ce que** la fente d'engagement (15) pour chaque tête (14) dans la plaque d'axe (13) est pourvue de saillies d'enclenchement qui fixent la région de pivotement du pivot dans l'évidement de pivotement (15) en position d'utilisation.
